# EUROPÄISCHE PATENTANMELDUNG

(11) **EP 2 466 178 A1**
(43) Veröffentlichungstag der Anmeldung: **20.06.2012**
(21) Anmeldenummer: 11189358.2
(22) Anmeldetag: 16.11.2011
(51) Int. Cl.: F16L 5/04

(54) **Brandschutzmodul**

(30) Priorität: 15.12.2010 DE 102010063096
(71) Anmelder: HILTI Aktiengesellschaft, 9494 Schaan (LI)
(72) Erfinder: Monden, Thomas, 87778 Stetten (DE); Mordau, Ulf, 86875 Waal (DE)

(57) **Zusammenfassung**

Bei einem Brandschutzmodul (1) für Wand- und Deckenöffnungen (6, 7), umfassend eine Hülse (2) zur Einführung in die Wand- oder Deckenöffnung (6, 7), einen Flansch (3) zur Auflage auf der Wand oder Decke (4, 5), soll die Montage des Brandschutzmoduls (1) einfach mit wenigen Schritten durchgeführt werden können.

Diese Aufgabe wird dadurch gelöst, dass die Hülse (2) und der Flansch (3) einteilig ausgebildet sind.

## Beschreibung

Die vorliegende Erfindung betrifft ein Brandschutzmodul gemäß dem Oberbegriff des Anspruches 1 und ein Verfahren zum Befestigen eines Brandschutzmoduls an einer Wand oder Decke gemäß dem Oberbegriff des Anspruches 11.

Im Bauwesen ist es erforderlich, bei Gebäuden an einer Wand oder einer Decke eine Wand- oder Deckenöffnung einzuarbeiten oder vorzusehen oder durch diese Wand oder Deckenöffnung Rohrleitungen durchzuführen. Dabei werden durch die Wand- und Deckenöffnungen auch brennbare oder schmelzbare Rohrleitungen durchgeführt, so dass in einem Brandfall aufgrund des Brennens oder Wegschmelzens der Rohrleitungen Öffnungen entstehen durch welche sich der Brand weiter in dem Gebäude ausbreiten kann. Aus diesem Grund ist es bekannt, an derartigen Wand- und Deckenöffnungen mit durch diese geführten brennbaren Rohrleitungen Brandschutzmodule anzuordnen mit einem intumeszierenden Material. Das intumeszierende Material erhöht das Volumen, d. h. expandiert im Brandfall unter Hitzeeinwirkung, und verschließt dadurch die entstehende Öffnung aufgrund des abschmelzenden oder brennbaren Rohres. Außerdem ist auch eine Kaltrauch- und Wasserdichtigkeit erforderlich.

Bei einer Durchführung von nicht brennbaren Rohren bzw. Rohrleitungen durch eine Wand- und Deckenöffnung in einem Bauwerk oder einem Gebäude ist es lediglich erforderlich, einen vorhandenen Spalt, insbesondere Ringspalt, zwischen den Rohren mit Mineralrolle auszustopfen und ein Brandschutzmodul beidseitig mit Dichtmasse gegen Rauch und Wasser abzudichten. Dabei können als Decken oder Wanddurchführungen auch Brandschutzmodule eingesetzt werden, die jedoch kein intumeszierendes Material aufweisen.

Die DE 90 11 951 U1 zeigt ein Brandschutzelement für Deckendurchbrüche. An einem Schenkel eines Blechwinkels ist eine Brandschutzplatte mit Hilfe von Abwinklungen gehalten und an einem freien Schenkel sind Durchbrechungen zur Aufnahme von Befestigungselementen ausgebildet.

Die Aufgabe der vorliegenden Erfindung besteht darin, einen Brandschutzmodul und ein Verfahren zum Befestigen eines Brandschutzmodul zur Verfügung zu stellen, bei dem die Montage des Brandschutzmoduls einfach mit wenigen Schritten durchgeführt werden kann.

Diese Aufgabe wird gelöst mit einem Brandschutzmodul, umfassend eine Hülse zur Einführung in die Wand- oder Deckenöffnung, einen Flansch zur Auflage auf der Wand oder Decke, wobei die Hülse und der Flansch einteilig ausgebildet sind. Bevorzugt sind die Hülse und der Flansch monolithisch ausgebildet, beispielsweise in einem gemeinsamen Spritzgussvorgang aus Kunststoff hergestellt.

Aufgrund der einteiligen bzw. einstückigen Ausbildung der Hülse und des Flansches kann das Brandschutzmodul in vorteilhafter Weise einfach und preiswert hergestellt werden und ferner ist die Montage des Brandschutzmodules an einer Wand- oder Deckenöffnung an einem Gebäude einfach auszuführen. Aufwendige Montageschritte zur separaten Befestigung oder Anordnung zunächst der Hülse und dann des Flansches sind dadurch nicht mehr erforderlich. Die Hülse und der Flansch können entweder als separate Bauteile hergestellt werden und anschließend unlösbar bei der Herstellung miteinander verbunden werden oder die Hülse und der Flansch werden bereits bei der Herstellung, z. B. Urformen, als ein einziges Bauteil hergestellt ohne dass in einem weiteren Herstellungsschritt eine Verbindung erforderlich ist. Dadurch ist es bei der Montage des Brandschutzmodules nicht erforderlich, die Hülse und den Flansch auf der Baustelle miteinander zu verbinden.

Insbesondere ist die Hülse im Querschnitt als ein die Wand- oder Deckenöffnung vollständig umschließendes Profil ausgebildet. Die Hülse als ein Rohr bzw. Rohrstutzen mit einer beliebigen Querschnittsform umschließt somit die Wand und Deckenöffnung im Bereich der Wand oder Decke vollständig, so dass innerhalb eines von der Hülse eingeschlossenen Rohrraumes keine unmittelbare Verbindung von dem Rohrraum an der Wand oder Deckenöffnung zu der Wand oder Decke besteht.

In einer weiteren Ausgestaltung ist die Hülse mit dem Flansch unlösbar und/oder stoffschlüssig und/oder formschlüssig und/oder kraftschlüssig verbunden, z. B. mit einer Schweiß-, Kleb- oder Nietverbindung.

In einer ergänzenden Ausführungsform umfasst der Flansch einen Rohrstutzen und ein Auflageteil. Das Auflageteil dient dazu, beim Einführen des Brandschutzmodules in die Wand oder Deckenöffnung als Begrenzungsteil zu fungieren, um dadurch nach dem Auflegen des Auflageteils auf die Wand oder Decke ein weiteres Einführen des Brandschutzmoduls in die Wand oder Deckenöffnung unmöglich zu machen. Dabei weist das Auflageteil in seiner Ausdehnung senkrecht zu einer Achse der Hülse und/oder der Wand oder Deckenöffnung eine größere Ausdehnung auf als die Wand oder Deckenöffnung.

Vorzugsweise ist der Rohrstutzen mit der Hülse verbunden und/oder die Querschnittsform des Rohrstutzens entspricht im Wesentlichen der Querschnittsform der Hülse und/oder das Auflageteil ist als ein Auflagering ausgebildet und/oder eine von dem Auflageteil aufgespannte Ebene ist im Wesentlichen senkrecht zu einer Achse der Hülse und/oder des Rohrstutzens ausgerichtet. Das Auflageteil kann dabei vorzugsweise neben der Ausbildung als Auflagering auch als eine Auflageplatte ausgebildet sein, wobei der Auflagering als auch die Auflageplatte eine

Öffnung aufweist, die im Wesentlichen der Geometrie der Öffnung der Hülse und/oder des Rohrstutzens entspricht.

In einer Variante sind die Hülse und/oder der Rohrstutzen im Querschnitt kreisförmig oder rechteckig, insbesondere quadratisch, ausgebildet.

Zweckmäßig ist innerhalb eines von der Hülse und/oder dem Rohrstutzen eingeschlossenen Rohrraumes inneres intumeszierendes Material, insbesondere in einem Aufnahmeraum, z. B. einer Ringnut, angeordnet, um im Brandfall den von Hülse und/oder dem Rohrstutzen eingeschlossenen Rohrraum abzudichten.

In einer weiteren Ausführungsform ist außerhalb der Hülse und/oder dem Rohrstutzen äußeres intumeszierendes Material angeordnet, um im Brandfall einen Raum, insbesondere Ringraum, zwischen der Hülse und/oder dem Rohrstutzen und der Wand oder Decke abzudichten.

Insbesondere ist innerhalb des Rohrraumes eine Gummimembran angeordnet zur Abdichtung eines in dem Rohrraum angeordneten Rohres. Die Gummimembran ist dabei vorzugsweise als ein Gummiring mit einer Gummiöffnung ausgebildet, wobei die Gummiöffnung geringfügig in der Größe kleiner ist als eine Rohrleitung, welche durch die Gummimembran abzudichten ist.

In einer weiteren Ausgestaltung ist an dem Flansch ein Dichtelement, insbesondere ein Dichtring, angeordnet zur Abdichtung des Brandschutzmodules bezüglich der Wand oder Decke und/oder das Brandschutzmodul umfasst ein Montageblech und das Montageblech dient zur Befestigung des Brandschutzmodules an der Wand oder Decke, z. B. mit wenigstens einer Schraube.

In einer weiteren Ausgestaltung umfasst das Brandschutzmodul einen Zusatzrohrstutzen, der an einem von der Hülse abgewandten Ende des Flansches befestigbar, insbesondere schraubbar ist. Bevorzugt ist der Zusatzrohrstutzen in den Flansch einschraubbar.

In einer zusätzlichen Ausgestaltung bestehen die Hülse und/oder der Flansch und/oder das Montageblech und/oder der Zusatzrohrstutzen wenigstens teilweise, insbesondere vollständig, aus Metall, z. B. Stahl oder Aluminium.

Die Aufgabe wird weiterhin gelöst durch ein Verfahren zum Befestigen eines Brandschutzmodules mit einer Hülse und einem Flansch an einer Wand oder einer Decke eines Bauwerkes mit den Schritten: vorzugsweise Einarbeiten einer Wand- oder Deckenöffnung in die Wand oder Decke, Einführen des Brandschutzmodules in die Wand- oder Deckenöffnung, Auflegen eines Auflageteiles des Flansches auf die Wand oder Decke, Befestigen des Brandschutzmodules an der Wand oder Decke, Anpassen der Länge des Brandschutzmodules. Die Länge des Brandschutzmoduls wird angepasst, indem ein Zusatzrohrstutzen an einem von der Hülse abgewandten Ende des Flansches bevorzugt durch Schrauben befestigt wird. Besonders bevorzugt wird der Zusatzrohrstutzen in den Flansch eingeschraubt.

In einer ergänzenden Variante ist das Brandschutzmodul als ein in dieser Schutzrechtsanmeldung beschriebenes Brandschutzmodul ausgebildet.

In einer weiteren Ausgestaltung wird das Brandschutzmodul mit einem Montageblech und wenigstens einer Schraube an der Wand oder Decke befestigt und/oder das Brandschutzmodul wird mit Klebstoff an der Wand oder Decke befestigt und vorzugsweise auch abgedichtet und/oder das Brandschutzmodul wird mit einem Dichtelement, insbesondere einem Dichtring, zwischen der Wand oder Decke und dem Flansch abgedichtet, indem zwischen dem Flansch und der Wand oder Decke das Dichtelement angeordnet und vorzugsweise das Dichtelement elastisch vorgespannt wird.

Insbesondere wird innerhalb eines von der Hülse und/oder dem Rohrstutzen eingeschlossenen Rohrraumes inneres intumeszierendes Material angeordnet, um im Brandfall den von Hülse und/oder dem Rohrstutzen eingeschlossenen Rohrraum abzudichten und/oder außerhalb der Hülse und/oder außerhalb des Rohrstutzens wird äußeres intumeszierendes Material angeordnet, um im Brandfall einen Raum zwischen der Hülse und/oder dem Rohrstutzen und der Wand oder Decke abzudichten.

Im Nachfolgenden wird ein Ausführungsbeispiel der Erfindung unter Bezugnahme auf die beigefügten Zeichnungen näher beschrieben. Es zeigt:
- Fig. 1: eine Explosionsdarstellung eines Brandschutzmodules,
- Fig. 2: einen Querschnitt eines an einem Bauwerk befestigten Brandschutzmodul gemäß Fig. 1 ohne einem Zusatzrohrstutzen und
- Fig. 3: eine perspektivische Ansicht des Brandschutzmodul mit dem Zusatzrohrstutzen in einem zweiten Ausführungsbeispiel.

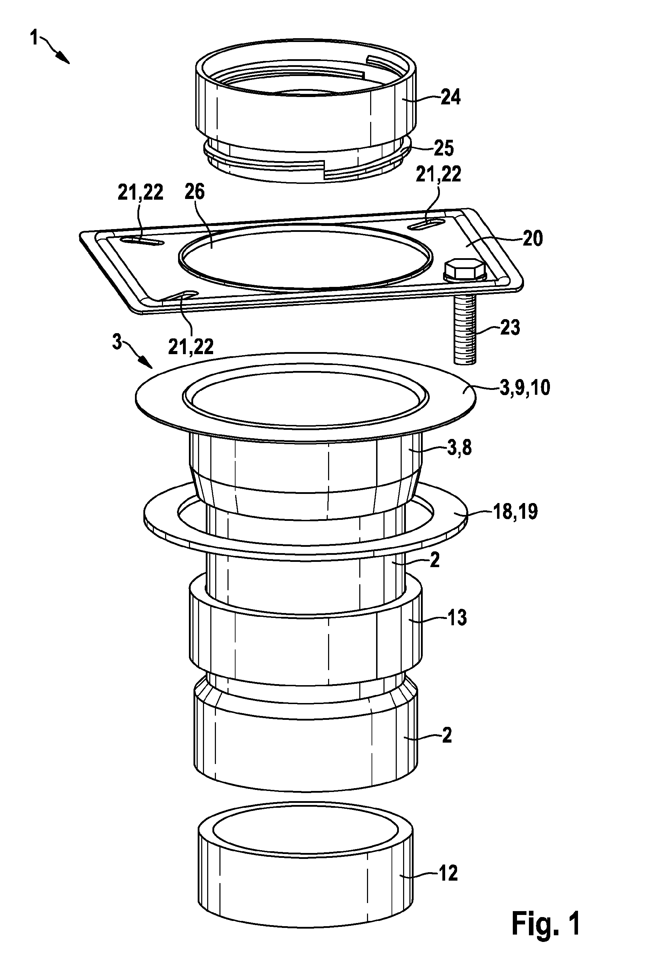

In Fig. 1 ist eine Explosionsdarstellung eines Brandschutzmodules 1 dargestellt. Das Brandschutzmodul 1 dient in Gebäuden oder Bauwerken dazu, eine Wandöffnung 6 oder eine Deckenöffnung 7, durch welche ein brennbares oder nicht brennbares Rohr bzw. Rohrleitung (nicht dargestellt) durchgeführt ist, zuverlässig, insbesondere auch im Brandfall, abzudichten. Dadurch soll im Brandfall das Ausbreiten des Brandes bzw. der Flammen behindert oder gehemmt werden.

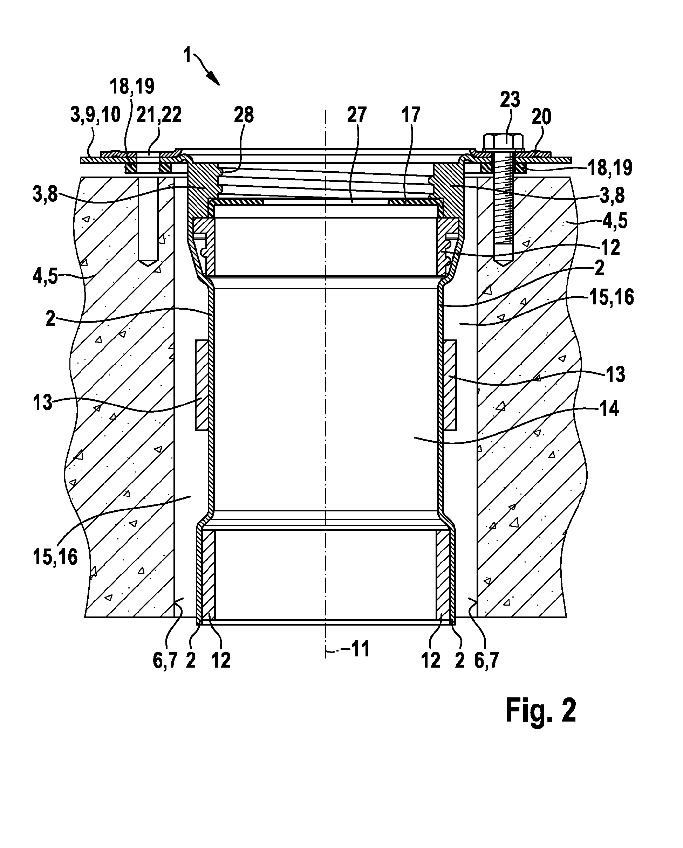

Das Brandschutzmodul 1 umfasst eine Hülse 2 und einen Flansch 3 aus Metall, z. B. Stahl. Der Flansch 3 besteht dabei aus einem als Auflagering 10 ausgebildeten Auflageteil 9 und einem Rohrstutzen 8. Eine von dem Auflageteil 9 aufgespannte Ebene steht dabei im Wesentlichen senkrecht zu einer Achse 11 der Hülse 2 und/oder des Rohrstutzens 8, d. h. ist mit einer Abweichung von weniger als 15°, 10° oder 5° senkrecht zu der Achse 11 ausgerichtet. Die Hülse 2 als auch der Rohrstutzen 8 schließen einen Rohrraum 14 ein. Innerhalb des Rohrraumes 14 ist inneres intumeszierendes Material 12, z. B. Blähgraphit, angeordnet. Ab einer Temperatur von ungefähr 200° C wird das intumeszierende Material 12 aktiviert und vergrößert sein Volumen, Blähgraphit beispielsweise um den Faktor 30. Bei einer Anordnung des Brandschutzmodules 1 in der Wandöffnung 6 oder der Deckenöffnung 7 an einer Wand 4 oder einer Decke 5 eines Bauwerkes (Fig. 2) bildet sich zwischen der Wand 4 bzw. der Decke 5 und der Hülse 2 sowie dem Rohrstutzen 8 des Flansches 3 ein Raum 15, der in seiner Geometrie einem Ringraum 16 entspricht. Außenseitig an der Hülse 2 oder dem Rohrstutzen 8 ist äußeres intumeszierendes Material 13 angeordnet, so dass in dem Rohrraum 14 das äußere intumeszierende Material 13 angeordnet ist.

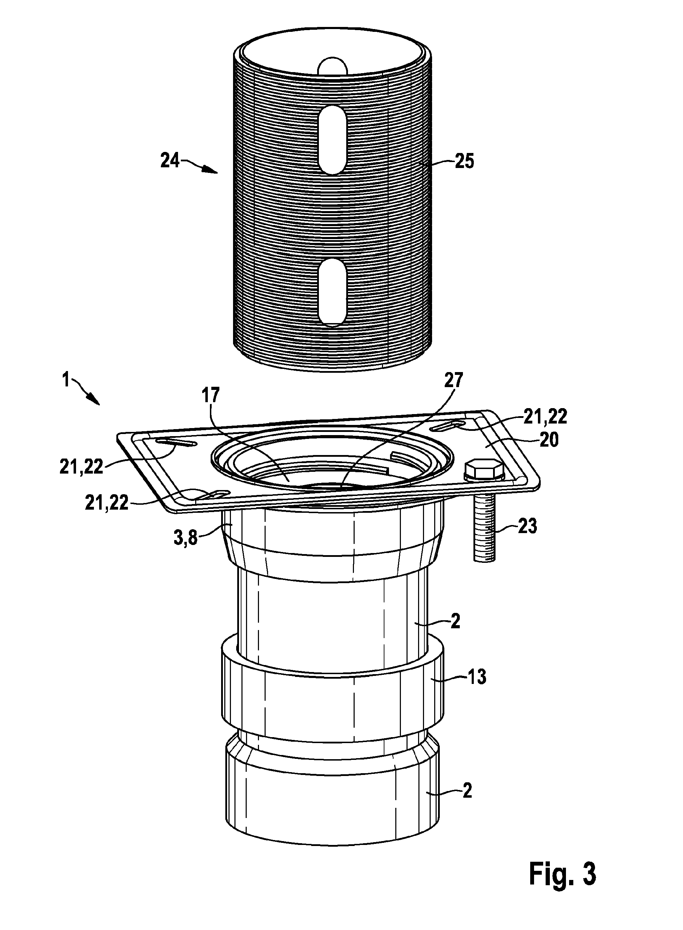

An dem Rohrstutzen 8 des Flansches 3 ist ferner eine Gummimembran 17 (Fig. 2 und 3) angeordnet. Die Gummimembran 17 weist dabei eine Membranöffnung 27 auf und die Größe der Membranöffnung 27 ist dabei geringfügig kleiner als der Durchmesser eines nicht dargestellten Rohres bzw. einer Rohrleitung aus brennbarem Material, welche durch den Rohrraum 14 und die Membranöffnung 27 geführt ist. Dadurch kann mit der Gummimembran 17 einerseits das Rohr bzw. die Rohrleitung innerhalb des Raumraumes 14 befestigt werden und außerdem ist mittels der Gummimembran 17 eine Abdichtung außerhalb eines Brandfalles gewährleistet. Im Brandfall expandiert oder vergrößert sich im Volumen das innere intumeszierende Material 12, so dass dadurch der Rohrraum 14 vollständig abgeschlossen wird auch bei einem schmelzenden oder abbrennenden Rohr innerhalb des Rohrraumes 14, welches von dem inneren intumeszierenden Material 12 ersetzt wird. Das äußere intumeszierende Material 13 wird ebenfalls bei einer Temperatur von ca. 200° C aktiviert und vergrößert sein Volumen, so dass dadurch im Brandfall der Ringraum 16 zwischen der Hülse 2 und oder dem Rohrstutzen 8 und der Wand 4 sowie der Decke 5 abgedichtet wird. Dadurch ist im Brandfall eine vollständige und zuverlässige Abdichtung der Wandöffnung 6 oder der Deckenöffnung 7 gewährleistet.

Vor dem Einführen des Brandschutzmodules 1 in die Wandöffnung 6 oder die Deckenöffnung 7 wird auf den Auflagering 10 ein Dichtelement 18, nämlich ein Dichtring 19, aufgelegt, so dass nach dem Einführen und Auflegen, d. h. mittelbaren Auflegens des Auflageringes 10 auf die Wand 4 oder die Decke 5, zwischen dem Auflagering 10 und der Wand 4 oder der Decke 5 der elastische Dichtring 19 als Formdichtung angeordnet ist. Mit Hilfe des Dichtringes 19 wird der Ringraum 16 außerhalb des Brandfalles zwischen der Wand 4 oder der Decke 5 und dem Rohrstutzen 8 bzw. der Hülse 2 abgedichtet. Dadurch ist auch bei einer Durchführung eines nicht dargestellten Rohres durch den Rohrraum 14 die Wandöffnung 6 oder die Deckenöffnung 7 zuverlässig gegen Wasser und Rauch abgedichtet.

Die mechanische Befestigung des Brandschutzmodules 1 erfolgt in dem in den Fig. 1 bis 3 dargestellten Ausführungsbeispiel mit Hilfe eines Montagebleches 20. Das Montageblech 20 weist dabei vier als Langlöcher 22 ausgebildete Bohrungen 21 auf, in denen jeweils Schrauben 23 angeordnet sind. Mit Hilfe der Schrauben 23 sowie vorzugsweise Dübeln und entsprechenden Bohrungen in der Wand 4 oder der Decke 5 (nicht dargestellt) wird das Brandschutzmodul 1 an der Wandöffnung 6 oder der Deckenöffnung 7 befestigt. Dabei liegt das Montageblech 20 auf dem Auflagering 10 auf und der Durchmesser oder die Größe eine Montageblechöffnung 26 entspricht im Wesentlichen dem Durchmesser oder der Größe der Öffnung an dem Rohrstutzen 8. Die Montageblechöffnung 26 fluchtet dabei mit der Öffnung an dem Rohrstutzen 8, so dass dadurch das Brandschutzmodul 1 an der Wand 4 oder der Decke 5 befestigt ist (Fig. 2).

In einem weiteren, nicht dargestellten Ausführungsbeispiel kann abweichend hiervon das Brandschutzmodul 1 mit Hilfe eines Klebers, insbesondere eines Zweikomponentenklebers an der Wand 4 oder der Decke 5 ohne dem Montageblech 20 stoffschlüssig befestigt werden. Der Klebestoff wird dabei zwischen die Wand 4 oder die Decke 5 und der Hülse 2 und/oder dem Rohrstutzen 8 und/oder dem Auflagering 10 angeordnet.

In manchen Anwendungen kann es erforderlich sein, an der Montageblechöffnung 26 oder an dem Ende des Flansches 3 zusätzlich einen Zusatzrohrstutzen 24 (Fig. 1 und 3) anzuordnen. Wird das Brandschutzmodul 1 beispielsweise an einer Deckenöffnung 7 angeordnet nach dem Fertigstellen der Ortbetondecke 5, ist es erforderlich, dass in die Montageblechöffnung 26 und den nachgeordneten Rohrraum 14 beispielsweise kein Wasser oder Estrich beim Einbringen von Estrich gelangt. Hierzu ist der Zusatzrohrstutzen 24 mit einem Außengewinde 25 versehen und mit Hilfe des Außengewindes 25 und einem Gegengewinde 28 an dem Flansch 3 kann der Zusatzrohrstutzen 24 befestigt werden, indem das Außengewinde 25 in Eingriff mit dem Gegengewinde 28 gebracht wird. In dem in Fig. 3 dargestellten zweiten Ausführungsbeispiel des Zusatzrohrstutzens 24 weist der Zusatzrohrstutzen 24 eine größere Ausdehnung in Richtung der Achse 11 auf sowie auch eine größere Ausdehnung des Außengewindes 25 in Richtung der Achse 11. Dabei kann der Zusatzrohrstutzen 24 in dem zweiten Ausführungsbeispiel gemäß Fig. 3 in unterschiedlichen Längen mit dem Flansch 3 verschraubt werden, so dass unterschiedliche Längen des Zusatzrohrstutzens 24 außerhalb oder oberhalb des Montagebleches 20 gemäß der Darstellung in Fig. 3 zur Verfügung stehen (nicht dargestellt). Dadurch kann die erforderliche Länge des Zusatzrohrstutzens 24, welcher oberhalb des Montagebleches 20 bzw. außerhalb des Flansches 3 angeordnet ist, an verschiedene Anwendungen angepasst werden.

Die Komponenten des Brandschutzmodules 1, nämlich insbesondere die Hülse 2, der Flansch 3, das Montageblech 20 und/oder der Zusatzrohrstutzen 24 sind vorzugsweise aus Metall, z. B. Stahl oder Aluminium, gefertigt. Abweichend hiervon können die Komponenten des Brandschutzmodules 1 auch aus Keramik gefertigt sein.

Insgesamt betrachtet sind mit dem erfindungsgemäßen Brandschutzmodul 1 wesentliche Vorteile verbunden. Die Hülse 2 und der Flansch 3 sind einteilig ausgebildet, so dass einerseits das Brandschutzmodul 1 in der Herstellung preiswert ist und andererseits bei der Montage des Brandschutzmodules 1 an der Wandöffnung 6 oder Deckenöffnung 7 diese beiden Teile, nämlich die Hülse 2 und der Flansch 3, nicht in aufwendiger Weise während der Montage auf der Baustelle miteinander zu verbinden sind.

## Patentansprüche

1. Brandschutzmodul (1) für Wand- und Deckenöffnungen (6, 7), umfassend eine Hülse (2) zur Einführung in die Wand- oder Deckenöffnung (6, 7),
einen Flansch (3) zur Auflage auf der Wand oder Decke (4, 5),
**dadurch gekennzeichnet, dass**
die Hülse (2) und der Flansch (3) einteilig, insbesondere monolithisch ausgebildet sind.

2. Brandschutzmodul nach Anspruch 1,
**dadurch gekennzeichnet, dass**
die Hülse (2) im Querschnitt als ein die Wand- oder Deckenöffnung (6, 7) vollständig umschließendes Profil ausgebildet ist.

3. Brandschutzmodul nach Anspruch 1 oder 2,
**dadurch gekennzeichnet, dass**
die Hülse (2) mit dem Flansch (3) unlösbar und/oder stoffschlüssig und/oder formschlüssig und/oder kraftschlüssig verbunden ist, z. B. mit einer Schweiß-, Kleb- oder Nietverbindung.

4. Brandschutzmodul nach einem oder mehreren der vorhergehenden Ansprüche,
**dadurch gekennzeichnet, dass**
der Flansch (3) einen Rohrstutzen (8) und ein Auflageteil (9) umfasst.

5. Brandschutzmodul nach Anspruch 4,
**dadurch gekennzeichnet, dass**
der Rohrstutzen (8) mit der Hülse (2) verbunden ist und/oder die Querschnittsform des Rohrstutzens (8) im Wesentlichen der Querschnittsform der Hülse (2) entspricht und/oder
das Auflageteil (9) als ein Auflagering (10) ausgebildet ist und/oder eine von dem Auflageteil (9) aufgespannte Ebene im Wesentlichen senkrecht zu einer Achse (11) der Hülse (2) und/oder des Rohrstutzens (8) ausgerichtet ist.

6. Brandschutzmodul nach einem oder mehreren der vorhergehenden Ansprüche,
**dadurch gekennzeichnet, dass**
die Hülse (2) und/oder der Rohrstutzen (8) im Querschnitt kreisförmig oder rechteckig, insbesondere quadratisch, ausgebildet ist.

7. Brandschutzmodul nach einem oder mehreren der vorhergehenden Ansprüche, **dadurch gekennzeichnet, dass**
innerhalb eines von der Hülse (2) und/oder dem Rohrstutzen (8) eingeschlossenen Rohrraumes (14) inneres intumeszierendes Material (12), insbesondere in einem Aufnahmeraum, z. B. einer Ringnut, angeordnet ist, um im Brandfall den von Hülse (2) und/oder dem Rohrstutzen (8) eingeschlossenen Rohrraum (14) abzudichten.

8. Brandschutzmodul nach einem oder mehreren der vorhergehenden Ansprüche,
**dadurch gekennzeichnet, dass**
außerhalb der Hülse (2) und/oder dem Rohrstutzen (8) äußeres intumeszierendes Material (13) angeordnet ist, um im Brandfall einen Raum (15), insbesondere Ringraum (16), zwischen der Hülse (2) und/oder dem Rohrstutzen (8) und der Wand (4) oder Decke (5) abzudichten.

9. Brandschutzmodul nach einem oder mehreren der vorhergehenden Ansprüche,
**dadurch gekennzeichnet, dass**
innerhalb des Rohrraumes (14) eine Gummimembran (17) angeordnet ist zur Abdichtung eines in dem Rohrraum (14) angeordneten Rohres.

10. Brandschutzmodul nach einem oder mehreren der vorhergehenden Ansprüche,
**dadurch gekennzeichnet, dass**
an dem Flansch (3) ein Dichtelement (18), insbesondere ein Dichtring (19), angeordnet ist zur Abdichtung des Brandschutzmodules (1) bezüglich der Wand (4) oder Decke (5) und/oder
das Brandschutzmodul (1) ein Montageblech (20) umfasst, welches bevorzugt einteilig, besonders bevorzugt monolithisch mit dem Flansch (3) ausgebildet ist, und das Montageblech (20) zur Befestigung des Brandschutzmodules (1) an der Wand (4) oder Decke (5), z. B. mit wenigstens einer Schraube (23), dient.

11. Brandschutzmodul nach einem oder mehreren der vorhergehenden Ansprüche,
**dadurch gekennzeichnet, dass**
das Brandschutzmodul (1) einen Zusatzrohrstutzen (24) umfasst und der Zusatzrohrstutzen (24) an einem von der Hülse (2) abgewandten Ende des Flansches (3) befestigbar, bevorzugt schraubbar, besonders bevorzugt einschraubbar ist.

12. Verfahren zum Befestigen eines Brandschutzmoduls (1) mit einer Hülse (2) und einem Flansch (3) an einer Wand (4) oder einer Decke (5) eines Bauwerkes mit den Schritten:
vorzugsweise Einarbeiten einer Wand- oder Deckenöffnung (6, 7) in die Wand (4) oder Decke (5),
Einführen des Brandschutzmoduls (1) in die Wand- oder Deckenöffnung (6, 7),
Auflegen eines Auflageteiles (9) des Flansches (3) auf die Wand (4) oder Decke (5),
Befestigen des Brandschutzmoduls (1) an der Wand (4) oder Decke (5),
Anpassen der Länge des Brandschutzmoduls (1),
**dadurch gekennzeichnet, dass**
die Länge des Brandschutzmoduls (1) angepasst wird, indem ein Zusatzrohrstutzen (24) an einem von der Hülse (2) abgewandten Ende des Flansches befestigt, bevorzugt geschraubt, besonders bevorzugt eingeschraubt wird.

13. Verfahren nach Anspruch 12,
**dadurch gekennzeichnet, dass**
das Brandschutzmodul (1) gemäß einem oder mehrerer der Ansprüche 1 bis 10 ausgebildet ist.

14. Verfahren nach einem oder mehreren der Ansprüche 12 bis 13,
**dadurch gekennzeichnet, dass**
das Brandschutzmodul (1) mit einem Montageblech (20) und wenigstens einer Schraube (23) an der Wand (4) oder Decke (5) befestigt wird und/oder
das Brandschutzmodul (1) mit Klebstoff an der Wand (4) oder Decke (5) befestigt und vorzugsweise auch abgedichtet wird
und/oder
das Brandschutzmodul (1) mit einem Dichtelement (18), insbesondere einem Dichtring (19), zwischen der Wand (4) oder Decke (5) und dem Flansch (3) abgedichtet wird, indem zwischen dem Flansch (3) und der Wand (4) oder Decke (5) das Dichtelement (18) angeordnet und vorzugsweise das Dichtelement (18) elastisch vorgespannt wird.

15. Verfahren nach einem oder mehreren der Ansprüche 12 bis 14,
**dadurch gekennzeichnet, dass**
innerhalb eines von der Hülse (2) und/oder dem Rohrstutzen (8) eingeschlossenen Rohrraumes (14) inneres intumeszierendes Material (12) angeordnet wird, um im Brandfall den von Hülse (2) und/oder dem Rohrstutzen (8) eingeschlossenen Rohrraum (14) abzudichten
und/oder
außerhalb der Hülse (2) und/oder außerhalb des Rohrstutzens (8) äußeres intumeszierendes Material (13) angeordnet wird, um im Brandfall einen Raum (15) zwischen der Hülse (2) und/oder dem Rohrstutzen (8) und der Wand (4) oder Decke (5) abzudichten.
